# EUROPEAN PATENT SPECIFICATION

(11) **EP 4 574 236 B1**
(45) Date of publication and mention of the grant of the patent: **21.10.2026**
(21) Application number: 23853805.2
(22) Date of filing: 19.01.2023
(51) Int. Cl.: B01D 53/04, B01D 53/50, B01D 53/62, B01D 53/78, B01D 53/80, F23B 80/02, F23C 9/00, F23D 1/00, F23J 15/00, F23J 15/02, F23L 7/00

(54) **SYSTEM AND METHOD FOR TREATING COAL-FIRED FLUE GAS**
SYSTEM UND VERFAHREN ZUR BEHANDLUNG VON KOHLEGEFEUERTEM RAUCHGAS
SYSTÈME ET PROCÉDÉ DE TRAITEMENT DE GAZ DE COMBUSTION À CHARBON

(30) Priority: 19.08.2022 CN 202210998783
(43) Date of publication of application: 25.06.2025
(73) Proprietor: Huaneng Clean Energy Research Institute, Beijing 102209 (CN)
(72) Inventor: GUO, Dongfang, Beijing 102209 (CN); YIN, Ling, Beijing 102209 (CN); WANG, Huanjun, Beijing 102209 (CN); ZHANG, Yuanxue, Beijing 102209 (CN); ZHENG, Zhaofang, Beijing 102209 (CN); LIU, Lianbo, Beijing 102209 (CN)
(74) Representative: Metida
(86) International application number: PCT/CN2023/073063
(87) International publication number: WO 2024/036884

(56) References cited:
- CN-A- 101 314 102
- CN-A- 101 381 628
- CN-A- 104 633 650
- CN-A- 113 310 063
- CN-A- 115 178 090
- CN-U- 204 629 454
- CN-U- 217 855 500
- JP-A- 2012 050 931
- US-A1- 2008 236 114

## Description

### TECHNICAL FIELD

The disclosure relates to air pollution control technology, in particular to a coal-fired flue gas treatment system and method.

### BACKGROUND

Due to industrial development and human activities, the concentration of carbon dioxide in the atmosphere continues to rise, leading to adverse climate changes such as the continuous rise of average temperature, the decline of sea level and the increase of precipitation in the future. In order to avoid all kinds of disasters, our country has paid special attention to the research and development of carbon capture, storage and utilization (CCUS) technology in recent years, and gradually launched CCUS landing projects in the fields of electric power, construction, industrial production, transportation and agriculture, and the scale and number of projects are increasing year by year. In many fields, carbon dioxide emissions from power industry are huge, accounting for 45% of the total emissions in our country. Therefore, carbon capture and recovery for flue gas emitted from thermal power plants and coal-fired power plants has become a key field of CCUS technology research.

The flue gas produced by boiler combustion in power plant contains a lot of nitrogen oxides, sulfur dioxide and carbon dioxide gas. Conventional flue gas treatment needs desulfurization, denitration and dust removal treatment before it is discharged into the atmosphere. A coal-fired flue gas treatment system having the features specified in the preamble of claim 1 is known from CN 204 629 454U. However, incomplete combustion of carbon monoxide gas, volatile organic gases and refractory organic compounds remain in the treated flue gas. If it is directly discharged into the atmosphere from the chimney, it will cause serious secondary pollution.

### SUMMARY

In order to overcome at least one defect of the prior art, the invention provides a coal-fired flue gas treatment system, which includes a carbon dioxide capture and recovery system and a decarbonization gas concentration system;
the carbon dioxide capture and recovery system is connected with a coal-fired device, and the carbon dioxide capture and recovery system performs recovery treatment on carbon dioxide from coal-burning flue gas generated by the coal-fired device;
the decarbonization gas concentration system is connected with the carbon dioxide capture and recovery system and the coal-fired device, and the decarbonization gas concentration system performs concentration treatment on coal-fired flue gas after recovery treatment and sends gas containing concentrated carbon monoxide to the coal-fired device.

According to the invention, the decarbonization gas concentration system includes
an activated carbon adsorption device, an air compressor, a before-concentration fan, and an after-concentration fan;
the air compressor, the before-concentration fan and the after-concentration fan are all connected to the activated carbon adsorption device;
coal-fired flue gas after carbon dioxide recovery treatment enters the activated carbon adsorption device through the before-concentration fan, the activated carbon adsorption device performs adsorption removal treatment on coal-fired flue gas, the air compressor performs desorption treatment on activated carbon of the activated carbon adsorption device, and gas after desorption treatment is sent to the coal-fired device through the after-concentration fan.

In an embodiment of the invention, the activated carbon adsorption device is an activated carbon concentration tower.

In an embodiment of the invention, the decarbonization gas concentration system further includes an exhaust fan;
the exhaust fan is connected with the activated carbon adsorption device.

According to the invention, the carbon dioxide capture and recovery system includes an SCR denitration reactor, a dust collector, a desulfurization device, a pretreatment device and a carbon dioxide absorption device;
the coal-fired device is connected with the SCR denitration reactor, the SCR denitration reactor is connected with the desulfurization device through the dust collector, and the desulfurization device is connected with the carbon dioxide absorption device through the pretreatment device;
coal-fired flue gas generated by the coal-fired device is discharged and then enters the SCR denitration reactor for denitration treatment, denitrated flue gas enters the dust collector to remove particles in the coal-fired flue gas, the desulfurization device performs desulfurization treatment on the coal-fired flue gas, flue gas after desulfurization treatment enters the pretreatment device for cooling and removing water vapor, and then enters the carbon dioxide absorption device for capturing carbon dioxide.

In an embodiment of the invention, the desulfurization device includes a wet desulfurization device, a desulfurization water tank and a concentration tank;
the concentration tank and the desulfurization water tank are both connected with the wet desulfurization device, and the concentration tank is connected with the desulfurization water tank.

In an embodiment of the invention, the dust collector is a cloth bag dust collector.

In an embodiment of the invention, the desulfurization device is a wet desulfurization tower.

According to the invention, the carbon dioxide absorption device is a carbon dioxide absorption tower.

At the same time, the invention also provides a coal-fired flue gas treatment method, which uses the coal-fired flue gas treatment system to treat the flue gas.

In the coal-fired flue gas treatment system and method provided by the invention, the decarbonization gas concentration system is connected with the carbon dioxide capture and recovery system and the coal-fired device, the coal-fired flue gas after recovery treatment is performed concentration treatment, gas containing concentrated carbon monoxide is sent to the coal-fired device, the decarbonization gas discharged after carbon dioxide capture treatment is efficiently utilized, and the decarbonization gas is desorbed into a gas with small air volume and high concentration containing CO and volatile organic compounds, which is introduced into the combustion device as an air supply source. The concentrated gas has high content of CO and volatile organic compounds and high heat value, which can be used as gas fuel to reduce the additional fuel and heat value of the combustion device, thus improving the combustion heat of the combustion device. By using the method of concentrating decarburized air and burning it, the residual incomplete combustion of volatile organic gases and refractory organic compounds in decarburized gas can be effectively decomposed by using the temperature of the combustion furnace, and organic amines can be prevented from escaping into the atmosphere and secondary pollution can be avoided by re-burning. Moreover, according to the coal-fired flue gas treatment system and method of the invention, the concentrated CO gas will regenerate carbon dioxide under the action of high temperature after entering the combustion furnace, and the newly generated carbon dioxide will enter the subsequent carbon dioxide absorption tower with the flue gas and be captured, thus achieving the maximum carbon emission reduction efficiency.

In order to make the above and other objects, features and advantages of the invention more obvious and easy to understand, the following is a detailed description of preferred embodiments, with the accompanying drawings.

### BRIEF DESCRIPTION OF THE DRAWINGS

In order to more clearly explain the embodiments of the invention or the technical scheme in the prior art, the drawings needed to be used in the description of the embodiments or the prior art will be briefly introduced below. Obviously, the drawings in the following description are only a part of embodiments of the invention, and other drawings can be obtained according to these drawings without creative work for ordinary skilled in the field.
FIG. 1 is a schematic diagram of a coal-fired flue gas treatment system according to an embodiment of the invention;
FIG. 2 is a block diagram according to an embodiment of the invention; and
FIG. 3 is a schematic diagram according to an embodiment of the invention.

### DETAILED DESCRIPTION OF THE EMBODIMENTS

In the following, the technical scheme in the embodiment of the invention will be clearly and completely described with reference to the attached drawings in the embodiment of the invention. Obviously, the described embodiment is only a part of the embodiment of the invention but not all of the embodiments. Based on the embodiments in the invention, all other embodiments obtained by ordinary skilled in the field without creative labor belong to the scope of protection of the invention.

In the prior art, after the carbon dioxide capture and recovery system is added to the treatment of coal-fired flue gas, the decarbonized gas discharged from the carbon dioxide absorption tower still remains incomplete combustion of carbon monoxide gas, volatile organic gas and refractory organic compounds, and if it is directly discharged into the atmosphere from the chimney, it will cause serious secondary pollution. In view of this, the invention provides a system for purifying decarbonized tail gas after carbon capture to synergistically improve combustion heat of coal. A decarbonized gas concentration system is used to desorb gases containing CO, VOCs(Volatile Organic Compounds) and organic amines with large air volume and low concentration into gases with small air volume and high concentration, which are transported back to the coal-fired combustion device through pipelines. While supplementing the air in the combustion device, the gas of CO, VOCs and organic amine concentrated in the gas is used to improve the combustion heat of the combustion device. At the same time, the high temperature of the combustion device can decompose the residual gas pollutants in the flue gas to achieve the purpose of purification. The carbon dioxide generated by burning CO gas enters the subsequent carbon dioxide capture and recovery system with the flue gas and is captured, which improves the carbon dioxide capture rate.

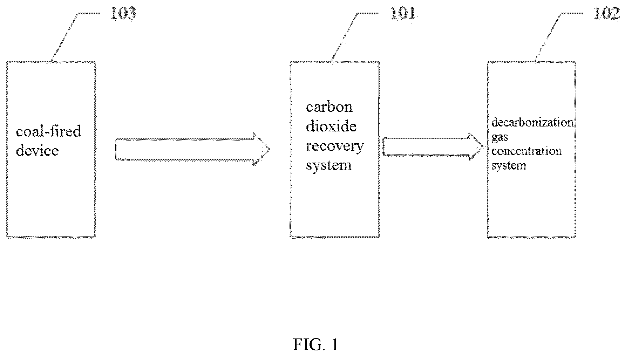

As shown in FIG. 1, it is a schematic diagram of a coal-fired flue gas treatment system provided by the invention, which includes a carbon dioxide capture and recovery system 101 and a decarbonization gas concentration system 102;
the carbon dioxide capture and recovery system is connected with a coal-fired device 103, and the carbon dioxide capture and recovery system 101 performs recovery treatment on carbon dioxide from coal-burning flue gas generated by the coal-fired device 103;
the decarbonization gas concentration system 102 is connected with the carbon dioxide capture and recovery system 101 and the coal-fired device 103, and the decarbonization gas concentration system performs concentration treatment on coal-fired flue gas after recovery treatment and sends gas containing concentrated carbon monoxide to the coal-fired device 103.

The coal-fired flue gas treatment system is provided by the invention, the decarbonization gas concentration system is used to perform concentration treatment on the coal-fired flue gas after recovery treatment, and the gas containing concentrated carbon monoxide is sent to the coal-fired device. A decarbonized gas concentration system is used to desorb gases containing CO, VOCs and organic amines with large air volume and low concentration into gases with small air volume and high concentration, which are transported back to the coal-fired combustion device through pipelines. While supplementing the air in the combustion device, the gas of CO, VOCs and organic amine concentrated in the gas is used to improve the combustion heat of the combustion device. The high temperature of the combustion device can decompose the residual gas pollutants in the flue gas to achieve the purpose of purification. The carbon dioxide generated by burning CO gas enters the subsequent carbon dioxide capture and recovery system with the flue gas and is captured, which improves the carbon dioxide capture rate.

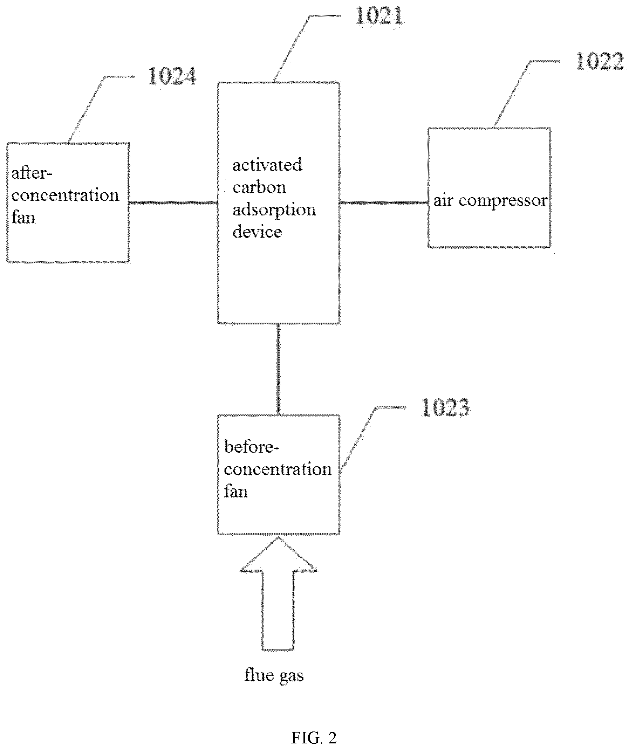

Further, in the embodiment of the invention, as shown in FIG. 2, the decarbonization gas concentration system 102 includes an activated carbon adsorption device 1021, an air compressor 1022, a before-concentration fan 1023, and an after-concentration fan 1024; the air compressor 1022, the before-concentration fan 1023 and the after-concentration fan 1024 are all connected to the activated carbon adsorption device 1021; coal-fired flue gas after carbon dioxide recovery treatment enters the activated carbon adsorption device through the before-concentration fan 1023, the activated carbon adsorption device 1021 performs adsorption removal treatment on coal-fired flue gas, the air compressor 1022 performs desorption treatment on activated carbon of the activated carbon adsorption device 1021, and gas after desorption treatment is sent to the coal-fired device through the after-concentration fan 1024.

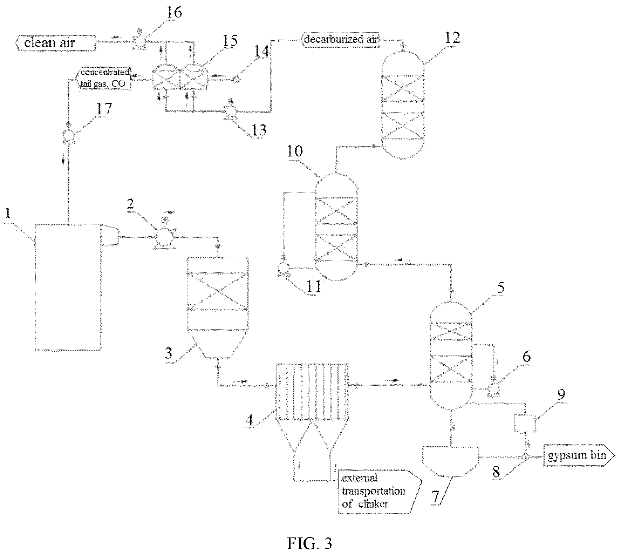

As shown in FIG. 3, it is a schematic diagram of the flue gas treatment system of a coal-fired power plant according to an embodiment of the invention. After the flue gas of the power plant is discharged from the combustion furnace 1, it is sent to the SCR denitration reactor 3 by the induced draft fan 2 for denitration treatment, and the denitrated flue gas enters the cloth bag dust collector 4 to remove the particles in the gas and separate the two phases, and the solid phase waste residue is discharged from below the dust collector 4 and then transported outside. Then the coal-fired flue gas enters the wet desulfurization tower 5 for desulfurization treatment, and the slurry generated by lime and sulfur dioxide is discharged into the concentration tank 7 from the tower bottom of the wet desulfurization tower 5. Solid-liquid separation is performed by the dehydration system 9, the solid phase is transported into the lime bin, and the liquid phase enters the circulating water tank to replenish water for the desulfurization tower. The gas after desulfurization treatment enters the pretreatment tower 10 for cooling and removing water vapor, and the flue gas after the gas is adjusted to a proper temperature and humidity through the pretreatment tower 10 and the pretreatment water pump 11 enters the carbon dioxide absorption tower 12, and reversely contacts the absorption liquid from bottom to top. The carbon dioxide in the flue gas is captured in the solution, and the decarbonized tail gas enters the activated carbon concentration tower 15 from the lower end under the power of the before-concentration fan 13, and the residual incomplete combustion of carbon monoxide gas, volatile organic gas, degraded organic compound and other components in the gas will enter the special pore structure of the activated carbon to be adsorbed and removed. The treated decarburized tail gas is discharged through the exhaust fan 16, the air inlet valve is cut off after the saturated activated carbon filler is adsorbed, the air compressor 14 is started to desorb the activated carbon, and the desorbed organic concentrated gas containing CO is returned to the combustion furnace 1 under the action of the after-concentration fan 17.

Preferably, in an embodiment of the invention, the gas is adjusted to a temperature of ≤ 50°C and an average relative humidity of ≤ 60% by the pretreatment tower 10 and the pretreatment water pump 11, and the absorption effect when entering the carbon dioxide absorption tower 12 is optimal.

The flue gas treatment system of a coal-fired power plant provided by this embodiment provides a system for purifying decarbonized tail gas after carbon capture to synergistically improve combustion heat of boiler in coal-fired power plant. After the high-temperature flue gas discharged from the combustion furnace passes through SCR denitration, cloth bag dust collector and wet desulfurization to remove impurities such as nitrogen oxides, dust and sulfur dioxide in the flue gas, it enters a carbon dioxide absorption tower and reversely contacts with a carbon capture solvent containing organic amine, and carbon dioxide will react with the solvent to be captured. Gaseous impurities that cannot be captured in the remaining flue gas, such as CO, VOCs and organic amines volatilized from the absorbent, will be directly discharged with the decarbonization tail gas, thus causing secondary air pollution. According to the invention, part of the decarbonized tail gas is adsorbed and concentrated by an activated carbon concentration tower, and the desorbed high-concentration gas containing CO, VOCs and organic amine is introduced into the combustion furnace through a pipeline, so that on the one hand, the organic gas is removed by high-temperature combustion, on the other hand, the concentration of CO, VOCs, organic amine and the like in the gas is increased, and the heat value of the gas can be reused by being introduced into the combustion furnace, so that the combustion heat of the boiler is improved, and the purpose of saving energy is achieved.

By using the flue gas treatment system of coal-fired power plant provided by this embodiment, purifying decarbonized tail gas after carbon capture to synergistically improve combustion heat of boiler in coal-fired boiler is achieved, and the decarbonization gas discharged from the carbon dioxide absorption tower can be efficiently utilized to desorb the organic gas with large air volume and low concentration into the gas with small air volume and high concentration containing CO and volatile organic compounds through the action of the activated carbon concentration tower, which is introduced into the combustion furnace as an air supply source, and the concentrated gas has high content of CO and volatile organic compounds and high calorific value, and can be used as a gas fuel to reduce the additional fuel and heat value of the combustion furnace, thereby improving the combustion heat of the combustion furnace.

Moreover, in an embodiment of the invention, the decarbonized air is concentrated and burned, so that the residual incomplete combustion of volatile organic gases and refractory organic compounds in the decarbonized gas can be effectively decomposed by using the temperature of the combustion furnace, and the circulating solvent in the carbon dioxide absorption tower will volatilize part of organic amines, so that the organic amines can be prevented from escaping into the atmosphere through re-burning, and secondary pollution can be avoided.

In an embodiment of the invention, after the concentrated CO gas enters the combustion furnace, it will regenerate carbon dioxide under the action of high temperature, and the newly generated carbon dioxide will enter the subsequent carbon dioxide absorption tower with the flue gas and be captured, thus achieving the maximum carbon emission reduction efficiency. In an embodiment of the invention, the activated carbon concentration tower adopts the mode of zonal adsorption and zonal desorption, and the gas flow direction is controlled through the air valve, thus ensuring the working efficiency.

Further, the invention also provides a coal-fired flue gas treatment method, which uses the coal-fired flue gas treatment system to treat the flue gas. For those skilled in the art, the implementation of the treatment method for coal-fired flue gas provided by the invention can be clearly understood through the description of the foregoing embodiments, and will not be repeated here.

In the coal-fired flue gas treatment system and method provided by the invention, the coal-fired flue gas after recovery treatment is performed concentration treatment, gas containing concentrated carbon monoxide is sent to the coal-fired device, the decarbonization gas discharged after carbon dioxide capture treatment is efficiently utilized, and the decarbonization gas is desorbed into a gas with small air volume and high concentration containing CO and volatile organic compounds, which is introduced into the combustion device as an air supply source. The concentrated gas has high content of CO and volatile organic compounds and high heat value, which can be used as gas fuel to reduce the additional fuel and heat value of the combustion device, thus improving the combustion heat of the combustion device. By using the method of concentrating decarburized air and burning it, the residual incomplete combustion of volatile organic gases and refractory organic compounds in decarburized gas can be effectively decomposed by using the temperature of the combustion furnace, and organic amines can be prevented from escaping into the atmosphere and secondary pollution can be avoided by re-burning. Moreover, according to the coal-fired flue gas treatment system and method of the invention, the concentrated CO gas will regenerate carbon dioxide under the action of high temperature after entering the combustion furnace, and the newly generated carbon dioxide will enter the subsequent carbon dioxide absorption tower with the flue gas and be captured, thus achieving the maximum carbon emission reduction efficiency.

In the invention, specific embodiments are applied to explain the principle and implementation of the invention, and the description of the above embodiments is only used to help understand the method and core idea of the invention. At the same time, according to the idea of the invention, there will be some changes in the specific implementation and application scope for ordinary skilled in this field. To sum up, the contents of this description should not be understood as limiting the invention.

## Claims

1. A coal-fired flue gas treatment system, wherein the coal-fired flue gas treatment system comprises a carbon dioxide capture and recovery system (101) and a decarbonization gas concentration system (102);
wherein the carbon dioxide capture and recovery system (101) performs recovery treatment on carbon dioxide from coal-burning flue gas generated by a coal-fired device (103);
the decarbonization gas concentration system (102) is connected with the carbon dioxide capture and recovery system (101), and the decarbonization gas concentration system (102) performs concentration treatment on coal-fired flue gas after recovery treatment and sends gas containing concentrated carbon monoxide to the coal-fired device (103);
**characterized in that** the decarbonization gas concentration system (102) comprises an activated carbon adsorption device (1021), an air compressor (1022), a before-concentration fan (1023), and an after-concentration fan (1024);
the air compressor (1022), the before-concentration fan (1023) and the after-concentration fan (1024) are all connected to the activated carbon adsorption device (1021);
coal-fired flue gas after carbon dioxide recovery treatment enters the activated carbon adsorption device (1021) through the before-concentration fan (1023), the activated carbon adsorption device (1021) performs adsorption removal treatment on coal-fired flue gas, the air compressor (1022) performs desorption treatment on activated carbon of the activated carbon adsorption device (1021), and gas after desorption treatment is sent to the coal-fired device (103) through the after-concentration fan (1024);
wherein the carbon dioxide capture and recovery system (101) comprises an SCR denitration reactor (3), a dust collector (4), a desulfurization device (5), a pretreatment device (10) and a carbon dioxide absorption device (12);
the coal-fired device (103) is connected with the SCR denitration reactor (3), the SCR denitration reactor (3) is connected with the desulfurization device (5) through the dust collector (4), and the desulfurization device (5) is connected with the carbon dioxide absorption device (12) through the pretreatment device (10);
coal-fired flue gas generated by the coal-fired device (103) is discharged and then enters the SCR denitration reactor (3) for denitration treatment, denitrated flue gas enters the dust collector (4) to remove particles in the coal-fired flue gas, the desulfurization device (5) performs desulfurization treatment on the coal-fired flue gas, flue gas after desulfurization treatment enters the pretreatment device (10) for cooling and removing water vapor, and then enters the carbon dioxide absorption device (12) for capturing carbon dioxide;
wherein the carbon dioxide absorption device (12) is a carbon dioxide absorption tower (12).

2. The coal-fired flue gas treatment system according to claim 1, wherein the activated carbon adsorption device (1021) is an activated carbon concentration tower (15).

3. The coal-fired flue gas treatment system according to claim 1, wherein the decarbonization gas concentration system (102) further comprises an exhaust fan (16);
the exhaust fan (16) is connected with the activated carbon adsorption device (1021).

4. The coal-fired flue gas treatment system according to claim 1, wherein the desulfurization device (5) comprises a wet desulfurization device, a desulfurization water tank and a concentration tank;
the concentration tank and the desulfurization water tank are both connected with the wet desulfurization device, and the concentration tank is connected with the desulfurization water tank.

5. The coal-fired flue gas treatment system according to claim 1, wherein the dust collector (4) is a cloth bag dust collector (4).

6. The coal-fired flue gas treatment system according to claim 1, wherein the desulfurization device (5) is a wet desulfurization tower (5).

7. A coal-fired flue gas treatment method, wherein the method uses the coal-fired flue gas treatment system according to any one of claims 1 to 6 to treat flue gas.

## Patentansprüche

1. Ein System zur Behandlung von kohlegefeuertem Rauchgas, wobei das System zur Behandlung von kohlegefeuertem Rauchgas ein Kohlendioxid-Erfassungs- und Rückgewinnungssystem (101) und ein Dekarbonisierungsgas-Konzentrationssystem (102) umfasst;
wobei das Kohlendioxid-Erfassungs- und Rückgewinnungssystem (101) eine Rückgewinnungsbehandlung an Kohlendioxid aus kohleverbrennendem Rauchgas durchführt, das von einer kohlegefeuerten Vorrichtung (103) erzeugt wird;
das Dekarbonisierungsgas-Konzentrationssystem (102) mit dem Kohlendioxid-Erfassungs- und Rückgewinnungssystem (101) verbunden ist, und das Dekarbonisierungsgas-Konzentrationssystem (102) eine Konzentrationsbehandlung an kohlegefeuertem Rauchgas nach der Rückgewinnungsbehandlung durchführt und Gas, das konzentriertes Kohlenmonoxid enthält, an die kohlegefeuerte Vorrichtung (103) sendet;
**dadurch gekennzeichnet, dass**
das Dekarbonisierungsgas-Konzentrationssystem (102) eine Aktivkohle-Adsorptionsvorrichtung (1021), einen Luftkompressor (1022), ein Vorkonzentrationsgebläse (1023) und ein Nachkonzentrationsgebläse (1024) umfasst;
der Luftkompressor (1022), das Vorkonzentrationsgebläse (1023) und das Nachkonzentrationsgebläse (1024) alle mit der Aktivkohle-Adsorptionsvorrichtung (1021) verbunden sind;
kohlegefeuertes Rauchgas nach der Kohlendioxid-Rückgewinnungsbehandlung durch das Vorkonzentrationsgebläse (1023) in die Aktivkohle-Adsorptionsvorrichtung (1021) eintritt, die Aktivkohle-Adsorptionsvorrichtung (1021) eine Adsorptionsentfernungsbehandlung am kohlegefeuerten Rauchgas durchführt, der Luftkompressor (1022) eine Desorptionsbehandlung an der Aktivkohle der Aktivkohle-Adsorptionsvorrichtung (1021) durchführt, und das Gas nach der Desorptionsbehandlung durch das Nachkonzentrationsgebläse (1024) an die kohlegefeuerte Vorrichtung (103) gesendet wird;
wobei das Kohlendioxid-Erfassungs- und Rückgewinnungssystem (101) einen SCR-Denitrierungsreaktor (3), einen Staubabscheider (4), eine Entschwefelungsvorrichtung (5), eine Vorbehandlungsvorrichtung (10) und eine Kohlendioxid-Absorptionsvorrichtung (12) umfasst;
die kohlegefeuerte Vorrichtung (103) mit dem SCR-Denitrierungsreaktor (3) verbunden ist, der SCR-Denitrierungsreaktor (3) durch den Staubabscheider (4) mit der Entschwefelungsvorrichtung (5) verbunden ist, und die Entschwefelungsvorrichtung (5) durch die Vorbehandlungsvorrichtung (10) mit der Kohlendioxid-Absorptionsvorrichtung (12) verbunden ist;
kohlegefeuertes Rauchgas, das von der kohlegefeuerten Vorrichtung (103) erzeugt wird, abgeführt wird und dann zur Denitrierungsbehandlung in den SCR-Denitrierungsreaktor (3) eintritt, denitriertes Rauchgas in den Staubabscheider (4) eintritt, um Partikel im kohlegefeuerten Rauchgas zu entfernen, die Entschwefelungsvorrichtung (5) eine Entschwefelungsbehandlung am kohlegefeuerten Rauchgas durchführt, Rauchgas nach der Entschwefelungsbehandlung zum Kühlen und Entfernen von Wasserdampf in die Vorbehandlungsvorrichtung (10) eintritt, und dann zum Erfassen von Kohlendioxid in die Kohlendioxid-Absorptionsvorrichtung (12) eintritt;
wobei die Kohlendioxid-Absorptionsvorrichtung (12) ein Kohlendioxid-Absorptionsturm (12) ist.

2. Das System zur Behandlung von kohlegefeuertem Rauchgas nach Anspruch 1, wobei die Aktivkohle-Adsorptionsvorrichtung (1021) ein Aktivkohle-Konzentrationsturm (15) ist.

3. Das System zur Behandlung von kohlegefeuertem Rauchgas nach Anspruch 1, wobei das Dekarbonisierungsgas-Konzentrationssystem (102) ferner ein Abluftgebläse (16) umfasst;
das Abluftgebläse (16) mit der Aktivkohle-Adsorptionsvorrichtung (1021) verbunden ist.

4. Das System zur Behandlung von kohlegefeuertem Rauchgas nach Anspruch 1, wobei die Entschwefelungsvorrichtung (5) eine Nassentschwefelungsvorrichtung, einen Entschwefelungswassertank und einen Konzentrationstank umfasst;
der Konzentrationstank und der Entschwefelungswassertank beide mit der Nassentschwefelungsvorrichtung verbunden sind, und der Konzentrationstank mit dem Entschwefelungswassertank verbunden ist.

5. Das System zur Behandlung von kohlegefeuertem Rauchgas nach Anspruch 1, wobei der Staubabscheider (4) ein Stoffbeutel-Staubabscheider (4) ist.

6. Das System zur Behandlung von kohlegefeuertem Rauchgas nach Anspruch 1, wobei die Entschwefelungsvorrichtung (5) ein Nassentschwefelungsturm (5) ist.

7. Ein Verfahren zur Behandlung von kohlegefeuertem Rauchgas, wobei das Verfahren das System zur Behandlung von kohlegefeuertem Rauchgas nach einem der Ansprüche 1 bis 6 verwendet, um Rauchgas zu behandeln.

## Revendications

1. Un système de traitement de gaz de combustion à charbon, dans lequel le système de traitement de gaz de combustion à charbon comprend un système de capture et de récupération de dioxyde de carbone (101) et un système de concentration de gaz de décarbonatation (102);
dans lequel le système de capture et de récupération de dioxyde de carbone (101) effectue un traitement de récupération sur le dioxyde de carbone à partir d'un gaz de combustion à charbon généré par un dispositif à charbon (103);
le système de concentration de gaz de décarbonatation (102) est relié au système de capture et de récupération de dioxyde de carbone (101), et le système de concentration de gaz de décarbonatation (102) effectue un traitement de concentration sur le gaz de combustion à charbon après le traitement de récupération et envoie un gaz contenant du monoxyde de carbone concentré au dispositif à charbon (103);
**caractérisé en ce que**
le système de concentration de gaz de décarbonatation (102) comprend un dispositif d'adsorption à charbon actif (1021), un compresseur d'air (1022), un ventilateur d'avant-concentration (1023) et un ventilateur d'après-concentration (1024);
le compresseur d'air (1022), le ventilateur d'avant-concentration (1023) et le ventilateur d'après-concentration (1024) sont tous reliés au dispositif d'adsorption à charbon actif (1021);
le gaz de combustion à charbon, après le traitement de récupération de dioxyde de carbone, entre dans le dispositif d'adsorption à charbon actif (1021) par l'intermédiaire du ventilateur d'avant-concentration (1023), le dispositif d'adsorption à charbon actif (1021) effectue un traitement d'élimination par adsorption sur le gaz de combustion à charbon, le compresseur d'air (1022) effectue un traitement de désorption sur le charbon actif du dispositif d'adsorption à charbon actif (1021), et le gaz, après le traitement de désorption, est envoyé au dispositif à charbon (103) par l'intermédiaire du ventilateur d'après-concentration (1024);
dans lequel le système de capture et de récupération de dioxyde de carbone (101) comprend un réacteur de dénitration RCS (3), un dépoussiéreur (4), un dispositif de désulfuration (5), un dispositif de prétraitement (10) et un dispositif d'absorption de dioxyde de carbone (12);
le dispositif à charbon (103) est relié au réacteur de dénitration RCS (3), le réacteur de dénitration RCS (3) est relié au dispositif de désulfuration (5) par l'intermédiaire du dépoussiéreur (4), et le dispositif de désulfuration (5) est relié au dispositif d'absorption de dioxyde de carbone (12) par l'intermédiaire du dispositif de prétraitement (10);
le gaz de combustion à charbon généré par le dispositif à charbon (103) est évacué puis entre dans le réacteur de dénitration RCS (3) pour un traitement de dénitration, le gaz de combustion dénitré entre dans le dépoussiéreur (4) pour éliminer des particules dans le gaz de combustion à charbon, le dispositif de désulfuration (5) effectue un traitement de désulfuration sur le gaz de combustion à charbon, le gaz de combustion, après le traitement de désulfuration, entre dans le dispositif de prétraitement (10) pour le refroidissement et l'élimination de la vapeur d'eau, puis entre dans le dispositif d'absorption de dioxyde de carbone (12) pour capturer le dioxyde de carbone;
dans lequel le dispositif d'absorption de dioxyde de carbone (12) est une tour d'absorption de dioxyde de carbone (12).

2. Le système de traitement de gaz de combustion à charbon selon la revendication 1, dans lequel le dispositif d'adsorption à charbon actif (1021) est une tour de concentration à charbon actif (15).

3. Le système de traitement de gaz de combustion à charbon selon la revendication 1, dans lequel le système de concentration de gaz de décarbonatation (102) comprend en outre un ventilateur d'évacuation (16);
le ventilateur d'évacuation (16) est relié au dispositif d'adsorption à charbon actif (1021).

4. Le système de traitement de gaz de combustion à charbon selon la revendication 1, dans lequel le dispositif de désulfuration (5) comprend un dispositif de désulfuration par voie humide, un réservoir d'eau de désulfuration et un réservoir de concentration;
le réservoir de concentration et le réservoir d'eau de désulfuration sont tous deux reliés au dispositif de désulfuration par voie humide, et le réservoir de concentration est relié au réservoir d'eau de désulfuration.

5. Le système de traitement de gaz de combustion à charbon selon la revendication 1, dans lequel le dépoussiéreur (4) est un dépoussiéreur à sacs en tissu (4).

6. Le système de traitement de gaz de combustion à charbon selon la revendication 1, dans lequel le dispositif de désulfuration (5) est une tour de désulfuration par voie humide (5).

7. Un procédé de traitement de gaz de combustion à charbon, dans lequel le procédé utilise le système de traitement de gaz de combustion à charbon selon l'une quelconque des revendications 1 à 6 pour traiter un gaz de combustion.
